# EUROPÄISCHE PATENTSCHRIFT

(11) **EP 0 899 173 B1**
(45) Veröffentlichungstag und Bekanntmachung des Hinweises auf die Patenterteilung: **05.11.2003**
(21) Anmeldenummer: 98113336.6
(22) Anmeldetag: 17.07.1998
(51) Int. Cl.: B60S 9/12, B66C 23/80

(54) **Fahrzeug mit Rahmenabstützung**
Vehicle with frame suspension
Véhicule avec chassis stabilisé

(30) Priorität: 29.08.1997 DE 19737678
(43) Veröffentlichungstag der Anmeldung: 03.03.1999
(73) Patentinhaber: Schwing GmbH, 44653 Herne (DE)
(72) Erfinder: Heckmann, Horst, Dipl.-Ing. FH, 45549 Sprockhövel (DE)
(74) Vertreter: Herrmann-Trentepohl, Werner, Dipl.-Ing.

(56) Entgegenhaltungen:
- US-A- 5 638 967

## Beschreibung

Die Erfindung betrifft ein Fahrzeug gemäß dem Oberbegriff des Anspruches 1.

Die Erfindung bezieht sich insbesondere auf Fahrzeuge mit einem Aufbau, der außer dem Mast und seinem Drehwerk sowie der Rahmenabstützung noch weitere Vorrichtungen, vorzugsweise eine Betonpumpe mit den für ihren Betrieb erforderlichen Baugruppen aufweist. Solche Fahrzeuge unterscheiden sich u.a. durch die Reichweite ihres Mastes voneinander, an den bei Betonpumpen die Betonförderleitung angeschlossen ist. Die Erfindung betrifft insbesondere derartige Fahrzeuge mit vergleichsweise geringen Reichweiten ihres Mastes und allgemein einfacher Bauart, die sich hieraus ergibt.

Für derartige Fahrzeuge benutzt man nach Möglichkeit serienmäßige Lkw-Fahrgestelle, deren Chassis nur unwesentlich geändert bzw. verstärkt wird, aber einen Rahmen für den Aufbau erhält. Die durch die Ausladung des Mastes entstehenden Kippmomente werden von der Rahmenabstützung auf der Standfläche des Fahrzeuges abgetragen. Da der Mast bei einem um einen Kreisbogen drehbaren Drehwerk voll in beiden Richtungen schwenkbar ist, benötigt man für seine Ausnutzung eine vordere und eine hintere Rahmenabstützung. Daraus ergibt sich an jeder Fahrzeugseite eine Zweitpunktabstützung.

Die von dem Mast ausgehenden Kippmomente machen es regelmäßig notwendig, die Abstützung außerhalb des Fahrzeugprofiles vorzusehen, das aber andererseits für den Fahrbetrieb eingehalten werden muß. Zwar sind die Kippmomente nach vorn und/oder nach hinten um die Querachse des Fahrzeuges weniger problematisch als um die Fahrzeuglängsachse, jedoch lassen sich in den meisten Fällen Kippmomente um die Fahrzeuglängsachse nicht vermeiden. Dann ergeben sich auch bei Fahrzeugen der eingangs beschriebenen einfacheren Bauart Reichweiten der Rahmenabstützung, die im ausgefahrenen Zustand außerhalb des Fahrzeugprofiles angeordnet sind.

Die Rahmenabstützung von Fahrzeugen erfolgt mit Hilfe von Auslegern, die als bewegliche Teleskope ausgeführt sind, um sie in den zugeordneten stationären Teleskopen im Fahrzeugprofil für die Fahrt raumsparend unterzubringen und für den Betrieb beispielsweise einer Betonpumpe auf die benötigte Länge ausfahren zu können. Die stationären Teleskope sind wenigstens zum Teil im Bogen tangential zur Fahrzeuglängsrichtung angeordnet und erstrecken sich jeweils von einer der Fahrzeugprofillängsseiten nach innen im wesentlichen bis zur Fahrzeugmitte und von dieser weiter bis zu derselben Fahrzeugprofillängsseite. Dadurch wird der Platz innerhalb des Fahrzeugprofiles auf beiden Fahrzeuglängsseiten voll ausgenutzt, was sich auf die Stützweite und die Länge der Ausleger vorteilhaft auswirkt.

Derartige Fahrzeuge sind an sich bekannt (US-A-5 638 967). Hierbei sind die stationären Teleskope jeder Fahrzeugseite voneinander getrennt in Trägern ausgeführt und am Fahrzeugrahmen entweder übereinander oder konzentrisch zueinander angeordnet, wobei die stationären Teleskope der vorderen und hinteren beweglichen Teleskope jeder Fahrzeuglängsseite mit einem gemeinsamen Träger verwirklicht sind. Das führt zu einem erheblichen Raumbedarf an den beiden Fahrzeugseiten und wegen der mit der gesonderten Befestigung jedes stationären Teleskopes am Fahrzeugrahmen auch zu einem technischen Mehraufwand, dessen Folge u. a. eine Vergrößerung des Fahrzeuggewichtes ist, das ohnehin durch den schweren Aufbau bereits im wesentlichen ausgenutzt ist.

Die Erfindung geht einen anderen Weg, dessen Grundgedanke im Anspruch 1 wiedergegeben ist. Weitere Merkmale der Erfindung sind Gegenstand der Unteransprüche.

Die Erfindung beruht auf einer Abstimmung der maximalen Stützweiten auf die zur Verfügung stehende Länge des Fahrzeuges, wodurch einerseits die Stützweite der beweglichen Teleskope ausreichend bemessen werden kann, andererseits aber die durch den Aufbau regelmäßig vergrößerte Länge des Fahrzeuges deren Unterbringung an beiden Fahrzeuglängsseiten im Fahrzeugprofil in der Weise ermöglicht, daß die beweglichen Teleskope hintereinander in einer gemeinsamen Ebene angeordnet sind. Dadurch ist es erfindungsgemäß möglich, die beiden jeder Fahrzeuglängsseite zugeordneten beweglichen Teleskope in einem gemeinsamen stationären Träger unterzubringen, aus dem sie getrennt voneinander an beiden Enden des Trägers austreten.

Durch die Erfindung wird erreicht, daß sich der Platzbedarf für die Unterbringung der beweglichen Teleskope auf eine Trägerebene an jeder Fahrzeugseite reduziert. Dadurch wird außerdem erheblich an Gewicht der Rahmenabstützung gespart, was sich vorteilhaft auf den technischen Gesamtaufwand auswirkt.

Vorzugsweise und mit den Merkmalen des Anspruches 2 sind die beweglichen und die stationären Teleskope in ihrem gemeinsamen Träger deckungsgleich. Das bedeutet, daß abgesehen von dem notwendigen Bewegungsspiel das lichte Profil des Trägers den äußeren Querschnitten der beweglichen Teleskope entspricht. Je nach Ausbildung der Führung in Form von Gleit- oder Rollenlagern ergeben sich dadurch Träger mit geringem Raumbedarf.

Gemäß einer weiteren vorteilhaften Ausführungsform der Erfindung, die im Anspruch 3 wiedergegeben ist, sind die Träger der stationären Teleskope an beiden Fahrzeugseiten kongruent. Das bedeutet, daß der Raumbedarf für die stationären Teleskope an beiden Fahrzeugseiten der gleiche ist, was außerdem den technischen Aufwand für die Träger vereinfacht, da diese in ihren wesentlichen Abmessungen miteinander übereinstimmen.

Vorzugsweise verlaufen die stationären Teleskope und damit die für ihre Verwirklichung vorgesehenen Träger bogenförmig, und zwar in Krümmungen, deren Radien an jeder der beiden Fahrzeugseiten gleich sind. Dadurch wird die Kongruenz der Träger an beiden Fahrzeugseiten ermöglicht, wenn diese bogenförmig verlaufen.

Diese in den Ansprüchen 3 und 4 wiedergegebenen Ausführungsformen der Erfindung sind jedoch für deren Verwirklichung nicht erforderlich. Die Erfindung erlaubt vielmehr die Anordnung und Ausführung der Teleskopausleger in Ausrichtung auf die Erfordernisse des Einzelfalles. Nach Anspruch 5 sind deshalb die beweglichen Teleskope mindestens einer, vorzugsweise aber auch beider Fahrzeugseiten unterschiedlich gekrümmt und die Träger weisen für jedes Teleskop eine entsprechende Krümmung auf. Eine solche Ausbildung der Rahmenabstützung gestattet unterschiedliche Stützweiten an der vorderen und hinteren Rahmenabstützung und damit eine bessere Anpassung der Rahmenabstützung an die vom Mast abhängigen Kippmomente.

Zu diesem Zweck können auch die Merkmale des Anspruches 6 eingesetzt werden, da hiernach wenigstens eines der beiden in einem Träger angeordneten stationären Teleskope ausgefluchtet ist, d.h. geradlinig verläuft.

Die Einzelheiten, weiteren Merkmale und andere Vorteile der Erfindung ergeben sich aus der nachfolgenden Beschreibung eines Ausführungsbeispieles anhand der Figuren in der Zeichnung; es zeigen
- Fig. 1: ein Fahrzeug in Draufsicht mit ausgefahrenen Teleskopen und
- Fig. 2: den Gegenstand der Fig. 1 mit eingefahrenen Teleskopen in Seitenansicht.

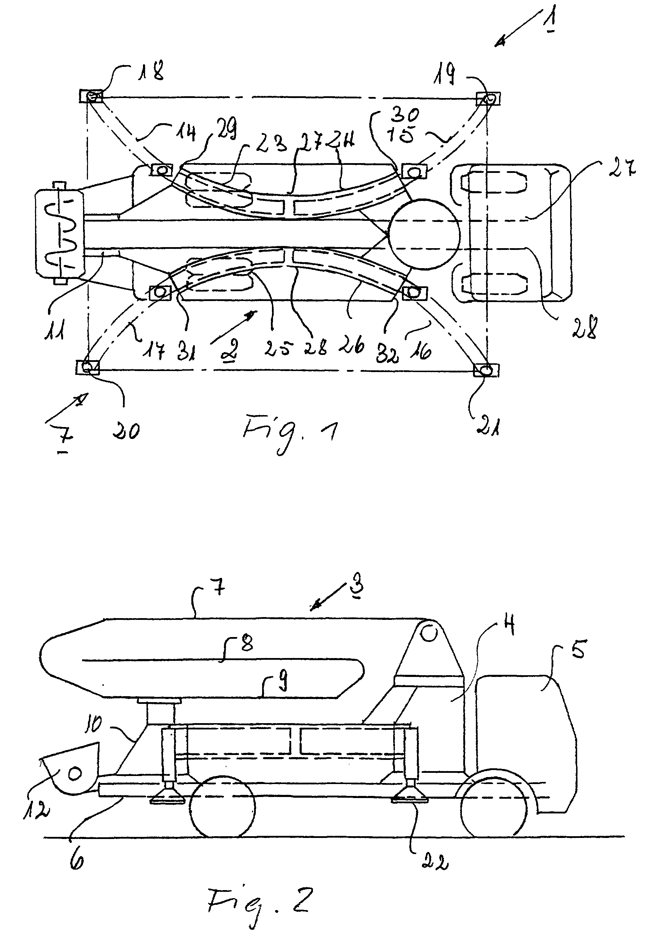

Das Fahrzeug 1 weist einen Aufbau 2 auf, der einen schwenkbaren Mast 3 auf einem Drehwerk 4 hinter dem Fahrerhaus 5 eines Lkw-Fahrgestells 6 und eine Rahmenabstützung aufweist, die in Fig. 1 allgemein mit 7 bezeichnet ist. Der Mast ist mit Hilfe von Betriebsgelenken in drei Sektionen 7, 8 und 9 unterteilt und auf einem mit seinen Einzelheiten nicht dargestellten Hilfsrahmen für die Fahrt bei 10 unterstützt. Zu dem Aufbau gehört außerdem eine Betonpumpe 11, deren Fülltrichter 12 hinter der Mastabstützung 10 angeordnet ist.

Die Rahmenabstützung 7 erfolgt mit Hilfe von beiderseits der Fahrzeuglängsseite angeordneten Auslegern, die als bewegliche Teleskope 14 bis 17 ausgeführt sind. An den freien Enden jedes dieser Teleskope befindet sich eine senkrechte Stütze 18 bis 21, die ihrerseits teleskopisch ausgeführt ist und an ihrem beweglichen Innenteleskop eine Bodenplatte 22 trägt.

Die ausgefahrenen Teleskope sind in strichpunktierter Linienführung in Fig. 1 dargestellt. Die Teleskope 15 und 16 bilden eine vordere Rahmenabstützung, während die Teleskope 14 und 17 die hintere Rahmenabstützung verwirklichen; im Ausführungsbeispiel sind alle Teleskope bogenförmig ausgebildet. Zu jedem Teleskop gehört ein stationäres Teleskop. Diese Teile der Rahmenabstützung sind in Fig. 1 mit 23 bis 26 bezeichnet.

Im Ausführungsbeispiel sind die stationären Teleskope ebenso wie die beweglichen Teleskope bogenförmig ausgeführt. Dabei ist die Anordnung so gewählt, daß die stationären Teleskope 23 bis 26 im Bogen tangential zur Fahrzeuglängsrichtung angeordnet sind und sich jeweils von einer der Fahrzeugprofillängsseiten nach innen im wesentlichen bis zur Fahrzeugmitte und von dieser weiter bis zu derselben Fahrzeugprofillängsseite erstrecken. Das ist so zu verstehen, daß die üblicherweise das Fahrzeugchassis bildenden beiden Längsträger 27 und 28 zwischen den Scheiteln der Bögen der stationären Teleskope 23, 24 und 26, 25 angeordnet sind.

Die stationären Teleskope 23, 24 bzw. 25, 26 der vorderen und hinteren beweglichen Teleskope 14, 15 bzw. 17, 16 jeder Fahrzeuglängsseite sind mit einem gemeinsamen Träger 27, 28 verwirklicht. In diesen Trägern sind die jeder Fahrzeugseite zugeordneten Teleskope hintereinander angeordnet und treten aus den ihnen jeweils zugeordneten Enden 29, 30 bzw. 31, 32 der Träger 27, 28 aus. Wie sich hieraus ergibt, überschreiten in der Horizontalen die voll eingefahrenen beweglichen Teleskope 14, 15 bzw. 16, 17 das Fahrzeugprofil nicht, so daß sich keine Überbreiten des Fahrzeuges im Fahrbetrieb ergeben. Außerdem wird in der Senkrechten der Raum zwischen den Chassisträgern 27 und 28 und der Fahrzeuglängsseite nur in der Trägerebene ausgenutzt, so daß eine sparsame Raumausnutzung gewährleistet ist.

Im Ausführungsbeispiel sind die beweglichen und stationären Teleskope mit ihrem gemeinsamen Träger 27, 28 deckungsgleich. Für die Träger 27 und 28 ergibt sich hieraus ein auf das notwendige Maß reduzierter Innenquerschnitt. Außerdem sind die Träger 27, 28 der stationären Teleskope 23 bis 26 an beiden Fahrzeugseiten kongruent. Dadurch entstehen bei voll ausgefahrenen Teleskopen an beiden Fahrzeugseiten gleiche Stützweiten.

Die Bögen der stationären Teleskope 23 bis 26 sind nach gleichen Radien gekrümmt, und die Träger 27 und 28 verlaufen nach eben diesen gleichen Krümmungsradien. Dadurch entsteht eine spiegelsymmetrische Anordnung zur Fahrzeugmittelebene, die sich auch auf den Gewichtsausgleich um die Fahrzeugmittelachse vorteilhaft auswirkt, da sie die Fahreigenschaften verbessert.

Abweichend vom dargestellten Ausführungsbeispiel können die beweglichen Teleskope 14, 15 bzw. 16, 17 an wenigstens einer Fahrzeugseite auch unterschiedlich gekrümmt sein, woraus sich dann ergibt, daß die Träger 27, 28 für jedes der Teleskope eine abweichende Krümmung aufweisen. Dadurch ist es möglich, die Stützweiten der vorderen und der hinteren Rahmenabstützung entsprechend den Erfordernissen eines Einzelfalles unterschiedlich zu wählen.

Ebenfalls in Abweichung von dem dargestellten Ausführungsbeispiel kann wenigstens eines der beiden in einem Träger 27, 28 angeordneten stationären Teleskope 23 bis 26 ausgefluchtet sein. Dadurch läßt sich die betreffende vordere oder hintere Rahmenabstützung einseitig oder doppelseitig weiter nach vorn oder hinten verlegen, um auf diese Weise einem gegebenen Einzelfall besser Rechnung zu tragen.

Wie sich hieraus ergibt, ermöglicht jede dieser Ausführungsformen eine weitgehende Anpassung an die Erfordernisse des Einzelfalles, wobei der Hauptvorteil erhalten bleibt, der darin besteht, daß nur wenig Platz beiderseits der Fahrzeugmitte im Fahrzeugprofil, d.h. Lichtraumprofil des Fahrzeuges benötigt wird.

## Patentansprüche

1. Fahrzeug (1) mit einem Aufbau (2), der wenigstens einen schwenkbaren Mast (3) auf einem Drehwerk (4) und eine Rahmenabstützung (7) mit Hilfe von beiderseits der Fahrzeuglängsseite angeordneten, vorderen und hinteren beweglichen Teleskopen (14-17), deren stationäre Teleskope (23-26) wenigstens zum Teil im Bogen tangential zur Fahrzeuglängsrichtung angeordnet sind und sich jeweils von einer der Fahrzeugprofillängsseiten nach innen im wesentlichen bis zur Fahrzeugmitte und von dieser weiter bis zu derselben Fahrzeugprofillängsseite erstrecken, wobei die stationären Teleskope (23, 24; 25, 26) der vorderen und hinteren beweglichen Teleskope (14, 15; 16, 17) jeder Fahrzeuglängsseite mit einem gemeinsamen Träger (27, 28) verwirklicht sind und die beweglichen Teleskope (14, 15 ; 16, 17) aus den zugeordneten Enden (29, 30 ; 31, 32) der Träger (27, 28) austreten, **dadurch gekennzeichnet, dass** die stationären Teleskope (23, 24; 25, 26) der vorderen und hinteren beweglichen Teleskope (14, 15; 16, 17) so hintereinander angeordnet sind, dass die vorderen und hinteren beweglichen Teleskope (14, 15; 16, 17) hintereinander in einer gemeinsamen Trägerebene untergebracht sind.

2. Fahrzeug nach Anspruch 1, **dadurch gekennzeichnet, daß** die beweglichen und die stationären Teleskope (14-16; 23-26) mit ihren gemeinsamen Trägern (27, 28) deckungsgleich sind.

3. Fahrzeug nach einem oder mehreren der vorausgehenden Ansprüche, **dadurch gekennzeichnet, daß** die Träger (27, 28) der stationären Teleskope (23-26) beider Fahrzeugseiten kongruent sind.

4. Fahrzeug nach einem oder mehreren der vorausgehenden Ansprüche, **dadurch gekennzeichnet, daß** die Bögen der stationären Teleskope (23-26) in nach einem Radius gekrümmten Trägern (27, 28) verlaufen und die Krümmungsradien beider Träger an jeder der beiden Fahrzeuglängsseiten gleich sind.

5. Fahrzeug nach Anspruch 1, **dadurch gekennzeichnet, daß** die beweglichen Teleskope (14, 15; 16, 17) wenigstens einer Fahrzeugseite unterschiedlich gekrümmt sind und die Träger (27, 28) für jedes Teleskop eine entsprechende Krümmung aufweisen.

6. Fahrzeug nach einem oder mehreren der vorausgehenden Ansprüche, **dadurch gekennzeichnet, daß** wenigstens eines der beiden in einem Träger (27, 28) angeordneten stationären Teleskope (23-26) ausgefluchtet ist.

## Claims

1. A vehicle (1) including a body (2), which has at least one pivotable mast (3) on a rotary mechanism (4) and frame stabilisation (7) with the aid of front and rear movable telescopes (14-17), which are arranged on both sides of the longitudinal side of the vehicle and whose stationary telescopes (23-26) are arranged at least in part in an arc tangential to the longitudinal direction of the vehicle and extend from one of the longitudinal sides of the vehicle profile inwardly substantially to the vehicle centre and on from there to the same longitudinal side of the vehicle profile, whereby the stationary telescopes (23, 24; 25, 26) of the front and rear movable telescopes (14, 15; 16, 17) on each longitudinal side of the vehicle are constituted by a common support (27, 28) and the movable telescopes (14, 15; 16, 17) pass out of the associated ends (29, 30; 31, 32) of the supports (27, 28), **characterised in that** the stationary telescopes (23, 24; 25, 26) of the front and rear movable telescopes (14, 15; 16, 17) are so arranged behind one another that the front and rear movable telescopes (14, 15; 16, 17) are accommodated behind one another in a common support plane.

2. A vehicle as claimed in Claim 1, **characterised in that** the movable and the stationary telescopes (14-16; 23-26) are congruent with their common supports (27, 28).

3. A vehicle as claimed in one or more of the preceding claims, **characterised in that** the supports (27, 28) of the stationary telescopes (23-26) on both sides of the vehicle are congruent.

4. A vehicle as claimed in one or more of the preceding claims, **characterised in that** the arcs of the stationary telescopes (23-26) extend in supports (27, 28) curved in a radius and the radii of curvature of the two supports on each of the two longitudinal sides of the vehicle are the same.

5. A vehicle as claimed in Claim 1, **characterised in that** the movable telescopes (14, 15; 16, 17) on at least one side of the vehicle are of different curvature and the supports (27, 28) for each telescope have a corresponding curvature.

6. A vehicle as claimed in one or more of the preceding claims, **characterised in that** at least one of the two stationary telescopes (23-26) arranged in a support (27, 28) is aligned.

## Revendications

1. Véhicule (1) comprenant une structure (2) qui présente au moins un mât (3) orientable situé sur un dispositif de rotation (4), et un châssis stabilisé (7) à l'aide de parties mobiles de bras télescopiques avant et arrière (14-17) disposées de part et d'autre du côté longitudinal du véhicule et présentant des parties fixes de bras télescopiques (23-26) qui sont disposées, au moins partiellement, de manière tangentielle et en arc par rapport au sens longitudinal du véhicule et qui s'étendent chacune d'un côté longitudinal du profil du véhicule vers l'intérieur, essentiellement jusqu'au centre du véhicule et, à partir de celui-ci, plus loin jusqu'au même coté longitudinal du profil du véhicule, où les parties fixes des bras télescopiques (23, 24 ; 25, 26) des parties mobiles des bras télescopiques avant et arrière (14, 15 ; 16, 17) de chaque côté longitudinal du véhicule sont réalisées avec un support (27, 28) commun, et où les parties mobiles des bras télescopiques (14, 15 ; 16, 17) font saillie aux extrémités respectives (29, 30 ; 31, 32) des supports (27, 28), **caractérisé en ce que** les parties fixes des bras télescopiques (23, 24 ; 25, 26) des parties mobiles des bras télescopiques (14, 15 ; 16, 17) avant et arrière sont disposées l'une derrière l'autre, de sorte que les parties mobiles des bras télescopiques (14, 15 ; 16, 17) avant et arrière sont logées l'une derrière l'autre dans un plan de support commun.

2. Véhicule selon la revendication 1, **caractérisé en ce que** les parties mobiles et fixes des bras télescopiques (14-17 ; 23-26) se conforment avec leurs supports communs (27, 28).

3. Véhicule selon l'une ou plusieurs des revendications précédentes, **caractérisé en ce que** les supports (27, 28) des parties fixes des bras télescopiques (23-26) des deux côtés du véhicule sont congruents.

4. Véhicule selon l'une ou plusieurs des revendications précédentes, **caractérisé en ce que** les arcs des parties fixes des bras télescopiques (23-26) sont situés dans les supports (27, 28) qui sont courbés selon un rayon, et **en ce que** les rayons de courbure des deux supports sont identiques sur chacun des deux côtés longitudinaux du véhicule.

5. Véhicule selon la revendication 1, **caractérisé en ce que** les parties mobiles des bras télescopiques (14, 15 ; 16, 17) présentent une courbure différente, au moins sur un côté du véhicule, et **en ce que** les supports (27, 28) présentent, pour chaque partie de bras télescopique, une courbure correspondante.

6. Véhicule selon l'une ou plusieurs des revendications précédentes, **caractérisé en ce qu'**au moins une des deux parties fixes des bras télescopiques (23-26) disposées dans un support (27, 28) est droite.
